Europäisches Patentamt

European Patent Office

Office européen des brevets

(19)

(11) Veröffentlichungsnummer: **0 242 375**
**B1**

(12) **EUROPÄISCHE PATENTSCHRIFT**

(45) Veröffentlichungstag der Patentschrift: **14.11.90**

(51) Int. Cl.⁵: **G 01 J 3/52**

(21) Anmeldenummer: **86905748.9**

(22) Anmeldetag: **17.10.86**

(86) Internationale Anmeldenummer:
**PCT/DE86/00419**

(87) Internationale Veröffentlichungsnummer:
**WO 87/02455 23.04.87 Gazette 87/09**

(54) **VERFAHREN ZUR HERSTELLUNG VON SYSTEMATISCHEN FARBTABELLEN BZW. FARBTAFELN FÜR DEN SIEBENFARBENDRUCK SOWIE NACH DIESEM VERFAHREN HERGESTELLTE TABELLEN BZW. TAFELN.**

(30) Priorität: **17.10.85 DE 3537008**

(43) Veröffentlichungstag der Anmeldung:
**28.10.87 Patentblatt 87/44**

(45) Bekanntmachung des Hinweises auf die
Patenterteilung:
**14.11.90 Patentblatt 90/46**

(84) Benannte Vertragsstaaten:
**CH DE FR GB IT LI NL SE**

(56) Entgegenhaltungen:
**WO-A-84/04974**
**CH-A- 120 551**
**DE-A-2 935 457**
**US-A-1 597 830**
**US-A-3 474 546**

(73) Patentinhaber: **Küppers, Harald**
**Im Buchenhain 1**
**D-6070 Langen (DE)**

(72) Erfinder: **Küppers, Harald**
**Im Buchenhain 1**
**D-6070 Langen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von systematischen Farbtabellen bzw. Farbtafeln für die Siebenfarbendruck sowie nach diesem Verfahren hergestellte Farbtabellen bzw. Farbtafeln, wobei jeweils gegeneinander abgestufte oder kontinuierlich verlaufende Farbfelder auf einen Aufzeichnungsträger (Bedruckstoff) gedruckt werden.

Es sind bereits systematische Farbtafeln für die Drucktechnik bekannt, bei denen auf weißem Bedruckstoff (z.B. Papier) nebeneinander einzelne Farbfelder in Form einer zweidimensionalen Tafel angeordnet sind, wobei die Farbnuancen sich von Farbfeld zu Farbfeld mit steigender Färbung (Dichtewert) in vorgegebener Stufung ändern, und wobei meistens die bunten Druckfarben Gelb, Magentarot, Cyanblau und die unbunte Druckfarbe Schwarz verwendet werden.

Für den Drei- bzw. Vierfarbendruck sind bereits Farbtafeln bekannt, die derart hergestellt werden, daß eine Ausgangstabelle systematische Mischmöglichkeiten zwischen zwei bunten Druckfarben zeigt und eine dritte bunte Druckfarbe in gleichen Tonstufen auf diese Ausgangstabelle aufgedruckt wird, wie dies z.B. in DuMonts' Farben-Atlas, zweite Auflage, 1981, beschrieben ist. Bei diesem Farben-Atlas sind drei verschiedene Ausgangstabellen vorhanden, und in jeder werden die Mischmöglichkeiten von zwei der drei bunten Druckfarben nach DIN 16 539 gezeigt. In gleichen Tonstufen wird über diese Ausgangstabellen die Druckfarbe Schwarz übergedruckt, wodurch diese Farbtafeln auch für eine Besonderheit des Vierfarbendrucks-nämlich den sogenannten "Unbuntaufbau"-als Kontroll-bzw. Vergleichselemente geeignet sind.

In der DE—PS 29 35 457 ist ein Verfahren zur Visualisierung von Farbnuancen beschrieben, das sich darauf bezieht, Farbnuancen in beliebiger Größe zu visualisieren, wobei die einzelnen Farben auf Transparentfolien gedruckt sind, die als Decker übereinandergelegt werden, bzw. die auf eine deckende Unterlage gelegt werden. Dadurch wird ermöglicht, durch eine relativ geringe Anzahl von Elementen, d.h. Unterlagen- und Transparentdecker, eine relativ große von Farbnuancen sichtbar zu machen.

Des weiteren ist in der WO—A——84/04974 ein Reprodukionsverfahren zu Herstellung mehrfarbiger Drucke angegeben, bei dem der Farbeindruck durch eine Vielzahl von eingefärbten Flächenelementen ensteht, wobei die Bildfläche in gleichgroße Teilflächen aufgeteilt und jede Teilfläche in nebeneinanderliegende Flächenelemente zerlegt wird, die einen Buntanteil und einen Unbuntanteil bilden, durch die die hervorzubringende Farbnuance der betreffenden Bildstelle bestimmt wird und die Flächenelemente, die den Buntanteil bilden, je nach dem zu erzeugenden Buntanteil mit maximal 2 von 6 bunten Druckfarben Gelb, Orangerot, Magentarot, Violettblau, Cyanblau und Grün gedruckt werden, und die Flächenelemente, die den Unbuntanteil ergeben, je nach dem zu erzeugenden Unbantanteil der Teilfläche anteilmäßig weiß und schwarz sind.

In der Druckschrift US—A—3 474 546 ist ein Farbbestimmungssystem beschrieben, das aus einer ersten Farbtafel besteht, die drei gegenseitig zusammenhängende Bereiche von Farbtönen auf weißem Hintergrund aufweist, wobei zwei aufeinander folgende Bereiche nebeneinander liegen. Diese Bereiche werden in kleinere Bereiche unterteilt, welche Spalten und Reihen bilden, wobei jeder der kleineren Bereiche im Rasterdruck als aufeinander folgende Reihe von variierenden Farbtönen dargestellt ist. Die Farbtöne von zwei benachbarten Bereichen sind überlagerte Drucke von nicht mehr als zwei der drei subtraktiven Primärfarben, wobei die Farbtonvariationen virtuell alle sichtbar unterscheidbaren Farbvariationen darstellen. Jeder Farbton ist bestimmt durch eine codierte Dichteangabe von nicht mehr als zwei substraktiven Primärfarben. Jede Spalte und Reihe ist durch Indizes gekennzeichnet, wobei ein Satz von Farbtafeln Farbtöne aufweist, die identisch zu denen der ersten Farbtafel sind. Jedem dieser Farbtöne der einzelnen Farbtafeln eines Satzes ist ein gleichmäßiger Helligkeitswert zugeordnet, der in den aufeinanderfolgenden Tafeln progressiv gestuft ist. Diese Farbtafeln sind aber nur für die drei Primärfarben geeignet.

Die Aufgabe der vorliegenden Erfindung besteht, darin für ein Reproduktionsverfahren mit sieben Druckfarben, auch Siebenfarbendruck genannt, ein Verfahren anzugeben, mit dem systematische Farbtafeln bzw. Farbtabellen hergestellt werden. Dabei ist es gleichgültig, ob es sich gemäß WO—A—84/04974 um nebeneinanderliegende Flächenelemente handelt oder um übereinanderliegende Rasterstrukturen.

Die Erfindung erreicht dies durch die im kennzeichnenden Teil des Anspruchs 1 angegebenen Merkmale. Vorteilhafte Weiterbildungen der Erfindung sind in den Unteransprüchen 2 bis 7 angegeben.

Die Erfindung wird im folgenden anhand der Figuren 1 bis 4 beschrieben. Es zeigen:

Figur 1 eine schematische Darstellung der 6 Ausgangstabellen, auf denen die Systematik des jeweiligen Farbverlaufs zu erkennen ist,

Figur 2 einen Ausschnitt aus der Farbtafel I der Fig. 1,

Figur 3 drei Farbtafeln zur Prüfung der Graubedingung der verwendeten 6 bunten Druckfarben und

Figur 4 ein Beispiel für die Kennzeichnung der einzelnen Farbnuancen.

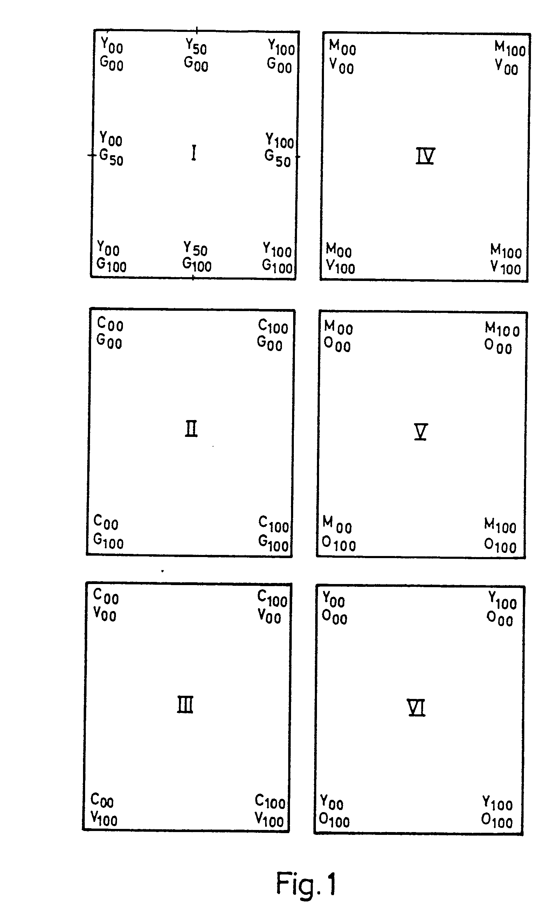

Das erfindungsgemäße Verfahren geht von sieben Druckfarben aus, die auf weißen Bedruckstoff, z.B. Papier, gedruckt werden. Es handelt sich um die sechs bunten Druckfarben Gelb, Magentarot, Cyanblau, Violettblau, Grün und Orangerot und um die unbunte Druckfarbe Schwarz. Es sind in Fig. 1 sechs Ausgangstabellen vorgesehen, die die systematischen Mischmöglichkeiten zwischen je zwei nebeneinanderliegenden (benachbarten) bunten Druckfarben zeigen, nämlich zwischen Gelb und Grün, Grün und Cyanblau, Cyanblau und Violettblau, Violettblau und Magentarot, Magentarot und Orangerot, Orangerot und Gelb. Die Tabellen entstehen dadurch, daß entweder in einem kontinuierlichen Verlauf oder in Tonstufen jede der beiden Ausgangsfarben in einem Rechteck so angeordnet sind, daß sie von einer Kante zur gegenüberliegenden von voller Fläche bis zum Nicht-mehr-Vorhandensein verläuft. Diese beiden Verläufe der bunten Druckfarben stehen in Winkeln von 90 Grad zueinander auf der Fläche.

Auf jede der so entstandenen sechs Ausgangstabellen wird in gleichen Tonstufen die Druckfarbe Schwarz aufgedruckt. Von Tabelle zu Tabelle ändert sich für die Druckfarbe Schwarz der Tonwert. So kann z.B. der Tonwert für die Farbe Schwarz auf einer Tabelle für sämtliche Farbuancen 10%, auf einen anderen 15% betragen.

Auf diese Weise wird der gesamte Farbenraum in sechs Teile zerlegt, was sechs "Integrierten Tetraedern" eines Rhomboeder-Systems entspricht. (Buch, Die Logik der Farbe, Callway Verlag, München, Auflage 1981, Seite 84 und folgende).

Im folgenden wird eine praktische Ausführung des Verfahrens zur Herstellung der Farbtafeln beschrieben.

Figur 1 zeigt sechs verschiedene mit I bis VI numerierte Farbtafeln, die als Ausgangstabellen dienen, wobei folgende Zuordnung der Farben in den einzelnen Farbtafeln besteht.

| | |
|---|---|
| I: | Y/G/S |
| II: | CC/G/S |
| III: | C/V/S |
| IV: | M/V/S |
| V: | M/O/S |
| VI: | Y/O/S |

Wobei

Y die Farbe Gelb,
G die Farbe Grün,
C die Farbe Cyanblau,
V die Farbe Violettblau,
M die Farbe Magentarot,
O die Farbe Orangerot und
S die Farbe Schwarz

bedeuten.

Der Aufbau einer einzelnen Farbtafel sei am Beispiel I der Farben Y/G/S beschrieben. Die Tafel I beginnt in der linken oberen Ecke mit dem Gelbwert $Y_{00}$ und dem Grünwert $G_{00}$, wobei die Indizes die entsprechenden Prozentwerte der Flächendeckung bzw. Färbung angeben. Die Farbe Gelb verläuft vom linken Rand ($Y_{00}$) zum rechten Rand ($Y_{100}$).

Die Farbe Grün verläuft vom oberen Rand ($G_{00}$) zum unteren Rand ($G_{100}$). Daraus ergibt sich für die obere rechte Ecke die Kennzeichnung $Y_{100}$, $G_{00}$, für die untere linke Ecke $Y_{00}$, $G_{100}$ und für die untere rechte Ecke $Y_{100}$, $G_{100}$.

Damit sind alle Mischmöglichkeiten dieser zwei bunten Ausgangsfarben systematisch dargestellt.

Die weiteren Tafeln II bis VI zeigen entsprechende Verläufe der dort eingetragenen Farben.

Das gesamte Tabellenwerk wird aus diesen sechs Ausgangs-Farbtafeln abgeleitet bzw. hergestellt, indem von jeder der sechs Ausgangstabellen eine solche Vielzahl weiterer Tafeln hergestellt wird, wie das Tafelwerk Abstufungen in der Druckfarbe Schwarz haben soll, und für jede Abstufung der Druckfarbe Schwarz von 0 bis 100% jeweils eine solche Ausgangstabelle zur Verfügung steht, die mit der jeweiligen Tonstufe der Druckfarbe Schwarz überdruckt wird. Dies bedeutet bei einer Stufung der Schwarzfarbe in Stufen von 10%, daß für jede Ausgangstabelle jeweils 11 dieser Farbtabellen entstehen, wobei 10 davon mit den entsprechenden Schwarzstufen überdruckt werden. Bei einer Stufung um 5% ergeben sich demgemäß 21 Farbtabellen.

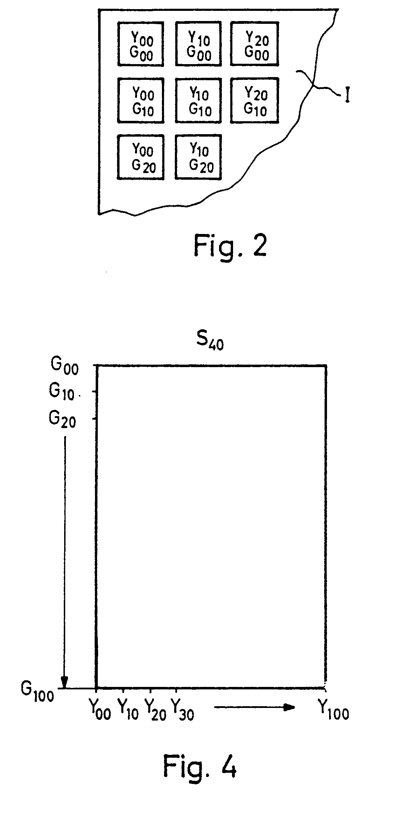

Die Fig. 2 zeigt einen Teilausschnitt der Farbtafel I aus Fig. 1, und zwar soll dargestellt werden, wie die einzelnen Farbfelder innerhalb einer Tafel nebeneinander angeordnet, sind. Als Beispiel wurde eine Stufung von 10% Flächendeckung (bzw. Färbung) von Farbfeld zu Farbfeld gewählt.

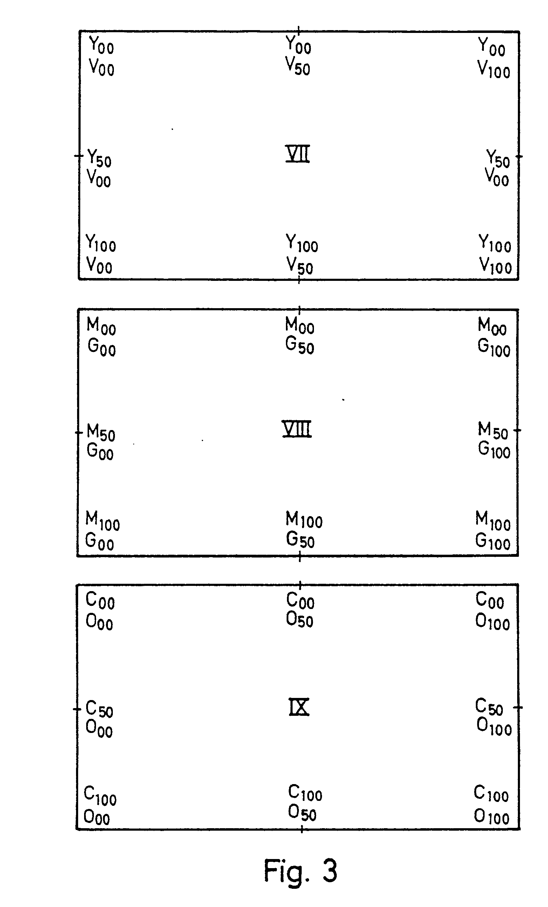

Die Fig. 3 zeigt eine vorteilhafte Ergänzung des Tabellenwerks für die Prüfung der Graubedingungen. In Figur 3 sind drei Tafeln beschrieben, die mit VII bis IX bezeichnet sind und folgende Kombinationen der Buntfarben zeigen.

In Fig. 3 sind die Farbtabellen VII bis IX gezeigt, die zur Prüfung der "Graubedingungen" der verwendeten bunten Druckfarben dienen. Dabei zeigen die Tafeln systematische Anordnungen folgender Farben:

| | |
|---|---|
| VII: | Y/V |
| VIII: | M/G |
| IX: | C/O |

In der Tafel VII verläuft die Färbung der Druckfarbe Gelb vom oberen ($Y_{00}$) zum unteren Rand ($Y_{100}$). Die Färbung der Druckfarbe Violettblau verläuft vom linken Rand ($V_{00}$) zum rechten Rand ($V_{100}$). Entsprechendes gilt für die Tafeln VIII für das Farbenpaar M/G und IX für das Farbenpaar C/O, woraus sich ergibt, daß die Graubedingungen auf der Diagonalen von links oben nach rechts unten sichtbar werden.

Dadurch, daß man für diese Tafeln die Komplementärfarben (Gegenfarben) heranzieht, ist eine optimale Möglichkeit zur Kontrolle der Graubedingungen gegeben. Man kann somit herausfinden, ob z.B. eine Druckfarbe Gelb zu rötlich oder eine Druckfarbe Blau zu grünlich ist. Diese Tafeln sind so aufgebaut, daß die beiden Farben in einem Winkel von 90° zueinander stehen und über die Fläche verlaufen.

Fig. 4 zeigt ein Beispiel für die Kennzeichnung der einzelnen Farbnuancen. Der Tabellenwert $S_{40}$ ist für alle Farbnuancen einer Tabelle gleich. Die werte in den Horizontalen geben bei diesem Beispiel die jeweiligen Werte für Grün und die Werte in den Vertikalen die jeweiligen Werte für Gelb an. Die Werte können am Tabellenrand für jede Farbnuance abgelesen werden, wodurch sich für jede Farbnuance eine logische Kennzeichnung ergibt.

Diese Farbtafeln bieten verschiedene Vorteile.

Der erste Vorteil ist die Tatsache, daß durch Mehrfarbendruck ein Farbenatlas (bzw. systematische Farbtabellen) mit einem besonders großen Farbenraum bei relativ kleinen Färbungstoleranzen wirtschaftlich (also kostengünstig) und ohne besondere technische Schwierigkeiten hergestellt werden kann.

Ein zweiter besteht darin, daß man sich für die Entwicklung einer Technologie des Sieben-Farben-Drucks auf diese systematischen Farbtabellen beziehen kann.

Und drittens ist ein Vorteil dadurch gegeben, daß jede Farbnuance eine Kennzeichnung erhält, die gleichzeitig als "Name" für diese Farbnuance fungiert und ihre Mischformel für den Sieben-Farben-Druck angibt, wobei die Kennzeichnung sich auf die jeweilige geometrische Flächendekkung in den Kopierfilmen beziehen kann.

Anwendung findet ein solches Tafelwerk auch mit Vorteil in der Reproduktionstechnik bei der Druckvorlagenherstellung im Sieben-Farben-Druck, um sich einen genauen Überblick darüber zu verschaffen, welche Korrekturen durchgeführt werden müssen, um von einer gegebenen Farbnuance zu einer gewünschten Farbnuance zu kommen, indem die Kennzeichnung der gegebenen Farbnuance mit der Kennzeichnung der gewünschten Farbnuance verglichen wird, wobei die Differenz die notwendige Korrektur angibt.

Dies sei an folgendem Beispiel erklärt.

Die in einem siebenfarbig gedruckten Bild beanstandete Farbnuance möge die Kennzeichnung $S_{30}$, $M_{40}$ und $O_{70}$ haben. Die gewünschte Farbnuance soll die Kennzeichnung $S_{40}$, $M_{35}$ und $@_{65}$ haben. Für die Korrektur wird nun die Differenz aus diesen beiden Kennzeichnungen herangezogen, und es ergeben sich folgende Korrekturen: S Wird um 10% verstärkt, M und O werden um jeweils 5% angeschwächt, d.h. vermindert.

Dies bedeutet, daß im Farbauszug von Schwarz die Bildstelle um 10% dunkler, im Farbauszug von Magentarot um 5% heller und im Farbauszug von Orangerot ebenfalls um 5% heller gedruckt wird.

Gemäß einer vorteilhaften Weiterbildung der Erfindung werden für den Anwendungsfall des Tiefdrucks die Felder der Tabellen durch Übereinanderdruck von Halbtonfeldern erzeugt.

Auch kann es vorteilhaft sein, die einzelnen Farbfelder auszustanzen und auf einer Unterlage lösbar zu befestigen. Hierdurch entsteht ein Farbenatlas mit beweglichen Chips, woraus sich eine sehr leichte Handhabung des Tabellenwerks ergibt. Dabei kann die Kennziechnung auf den einzelnen Chips vorne oder hinten aufgebracht sein.

Auch können die gedruckten Farbfelder ausgeschnitten und auf ein anderes Trägermaterial aufgeklebt werden.

Weitere Vorteile der Erfindung bestehen darin, daß durch diese Verfahrenstechnik die auf den Bedruckstoff übertragene Farbmenge geringer ist als im konventionellen Mehrfarbendruck nach DIN 16 539 und auch geringer als mit der neuen Methode des Unbuntaufbaus, der im DuMonts's Farbenatlas dargestellt ist, bei dem die unvermeidlichen Farbführungsschwankungen im Auflagendruck zu geringeren Färbungstoleranzen führen als im "orthodoxen" Vier-Farben-Druck.

Wo im Vier-Farben-Druck z.B. die Farbe Orangerot dadurch gebildet wird, daß die volle Farbschicht Gelb und die volle Farbschicht Magentarot übereinander gedruckt werden, wird gemäß der Erfindung nur noch eine einzige Farbschicht Orangerot gedruckt.

Die unvermeidlichen Toleranzen, die im Mehrfarbendruck durch Farbführungsschwankungen entstehen, werden wesentlich geringer, als in bischer bekannten Farbtabellen. Dies um so mehr, als auch das große Problem der Farbannahme (d.h. die nachfolgende bunte Druckfarbe wird von der vorher gedruckten bunten Druckfarbe nicht voll angenommen) wesentlich verringert wird.

Im Gegensatz zu den bekannten systematischen Farbtafeln, z.B. Farbtabellen der Druckfarben nach DIN 16 539 und auch Farbtabellen mit Unbuntaufbau im Du Mont's-Farbenatlas, gibt es in diesem Tabellenwerk in den Farbbereichen Violettblau, Grün und Orangerot reinere, leuchtendere und kräftigere Farben. Dadurch, daß jeweils zwei benachbarte (nebeneinanderliegende) bunte Druckfarben in einer Ausgangstabelle zusammenkommen, z.B. Gelb mit Orangerot oder Gelb mit Grün, ist die Wirkung der Fehlabsorptionen und Fehlreflektionen wesentlich geringer, so daß entsprechend reinere Mischnuancen entstehen.

## Patentansprüche

1. Verfahren zur Herstellung systematischer Farbtabellen bzw. Farbtafeln für den Siebenfarbendruck, wobei die bunten Druckfarben Gelb, Magentarot, Cyanblau, Violettblau, Grün und Orangerot und die unbunte Druckfarbe Schwarz verwendet werden, die auf einen Bedruckstoff aufgedruckt werden, dadurch gekennzeichnet, daß in den Farbtabellen jeweils zwei benachbarte bunte Druckfarben in definierten Abstufungen ihrer Flächendeckung oder verlaufend mit der unbunten Druckfarbe Schwarz in den Kombinationen Y/G/S, G/C/S, C/V/S, V/M/S, M/O/S und O/Y/S derart zusammenkommen, daß die beiden varlaufenden Abstufungen der bunten Druckfarben im Winkel von 90° zueinanderstehen, wobei:

Y die Farbe Gelb, M die Farbe Magentarot, C die Farbe Cyanblau, V die Farbe Violettblau, G die Farbe Grün und O die Farbe Orangerot und S die Farbe Schwarz darstellt.

2. Verfahren nach Anspruch 1, dadurch gekennzeichnet, daß insbesondere für den Tiefdruck die Felder der Tabellen durch Übereinanderdruck von lasierenden Halbtonschichten erzeugt werden.

3. Verfahren nach Anspruch 1 oder 2, dadurch gekennzeichnet, daß die einzelnen Farbfelder ausgestanzt und auf einer Unterlage lösbar befestigt sind, so daß ein Farben-Atlas mit beweglichen Chips ensteht.

4. Verfahren nach einem der Ansprüche 1 und 2, dadurch gekennzeichnet, daß die gedruckten Farbfelder ausgeschnitten oder ausgestanzt und auf ein anderes Trägermaterial aufgeklebt werden.

5. Verfahren nach einem der Ansprüche 1—4, dadurch gekennzeichnet, daß die Flächendeckung in dem Kopierfilm (bzw. die Färbung) an der Tabelle für jede einzelne Farbnuance anlesbar ist.

6. Verfahren nach einen der Ansprüche 1—5, dadurch gekennzeichnet, daß als Bedruckstoff weißes Papier verwendet wird.

7. Verfahren nach Anspruch 6, dadurch gekennzeichnet, daß der Bedruckstoff nicht weiß, sondern von einer beliebigen Farbe ist und daß durch Aufbringen mit deckenden Druckfarben auf den Bedruckstoff der Farbeindruck der betreffenden Bildstelle durch eine Vielzahl von Flächenelementen ensteht, wobei jede einzelne Bildstelle in gleich große Teilflächen aufgeteilt und jede Teilfläche in nebeneinanderliegende Flächenelemente zerlegt wird, die einen Buntanteil und einen Unbuntanteil bilden, durch die die hervorzubringende Farbnuance bestimmt wird, wobei als achte Druckfarbe zusätlich die Farbe Weiß eingesetzt wird, um jene Flächenelemente zu bedecken, die bei Siebenfarbendruck auf weißem Bedruckstoff freibleiben.

## Revendications

1. Procédé pour fabriquer des tableaux chromatiques ou des tables chromatiques systématiques pour l'impression en heptachromie, procédé dans lequel on utilise les encres colorées d'impressions jaune, rouge magenta, bleu cyan, bleu violett, vert et rouge orangé et l'encre d'impression non colorée, noir, ces encres étant imprimées en superposition sur un matériau d'impression, procédé caractérisé en ce que dans les tableux chromatiques, respectivement deux encres d'impression colorées voisines sont rassemblées selon des échelonnements définis de leur recouvrement de surface ou bien en se fondant avec l'encre d'impression non colorée noire selon les combinaisons Y/G/S, G/C/S, C/V/S, V/M/S, M/O/S et O/Y/S de façon que les deux échelonnements se fondant avec les encres d'impression colorées sont à un angle de 90° l'un par rapport à l'autre, Y représentant la couleur jaune, M la couleur rouge magenta, C la couleur bleu cyan, V la couleur bleu violet, G la couleur vert et O la couleur rouge orangé, et S représentant le noir.

2. Procédé selon la revendication 1, caractérisé en ce que notamment pour l'impression hélio, les champs des tableux sont obtenus par impressions superposées de couches d'encres transparentes demi-teinte.

3. Procédé selon la revendication 1 ou la revendication 2, caractérisé en ce que les différents champs chromatiques son estampés et fixés de façon amovible sur un support, de sorte qu'on obtient un atlas de couleurs avec des plaquettes mobiles.

4. Procédé selon une des revendications 1 et 2, caractérisé en ce que les champs chromatiques imprimés sont découpés ou estampés et sont collés sur un autre matériau de support.

5. Procédé une des revendications 1 à 4, caractérisé en ce que le recouvrement de surface dans le film copie (ou la coloration) est susceptible d'être lu sur les tableaux pour chacune des nuances de couleurs individuelles.

6. Procédé selon une des revendications 1 à 5, caractérisé en ce que, en tant que matériau d'impression, on utilise du papier blanc.

7. Procédé selon la revendication 6, caractérisé en ce que le matériau d'impression n'est pas blanc mais d'une couleur quelconque et que, grâce à l'apport de couleurs d'impression couvrantes sur ce matériau d'impression, l'impression en couleur de l'emplacement d'image concerné est constituée par une pluralité d'éléments de surface, chaque emplacement d'image individuel étant subdivisé en des surfaces partielles de même dimension, et chaque surface partielle étant divisée en éléments de surfaces contiguës, qui constituent une partie colorée et une partie non colorée grâce auxquelles la nuance de couleur à faire apparaître, est déterminée, la couleur blanche étant en outre mise en oeuvre en tant que huitième couleur d'impression pour recouvrir les éléments de surface qui restent libres sur le matériau d'impression blanc lors de l'impression en heptachromie.

## Claims

1. A method for producing systematic colour tables or colour charts for seven-colour printing, wherein there are used the chromatic printing colours yellow, magenta red, cyan-blue, violet blue, green and orange-red and the achromatic printing colour black, which are printed on to a printing substrate, characterised in that each two adjacent chromatic printing colours are positioned together in the colour tables in defined gradations of their surface coverage or in smooth transitions with the achromatic printing colour black in the combinations Y/G/K, G/C/K, C/V/K, V/M/K, M/O/K and O/Y/K in such a way that the two smooth gradations of the chromatic printing colours extend at an angle of 90° to each other, Y denoting the colour yellow, M the colour magenta red, C the colour cyan-blue, V the colour violet blue, G the colour green, O the colour orange-red and K the colour black.

2. A method according to claim 1, characterised in that for intaglio printing the areas of the tables are produced by superimposition printing of transparent halftone layers.

3. A method according to claim 2, characterised in that the individual colour fields are stamped out and releasably secured on a base, so that a colour chart comprising removable "chips" is produced.

4. A method according to one of claims 1 and 2, characterised in that the printed colour fields are cut out or stamped out and are glued on to another carrier material.

5. A method according to one of the claims 1—4, characterised in that the surface coverage in the copy film (or the colouration) can be read off on the table for each colour shade.

6. A method according to one of claims 1 to 5, characterised in that white paper is used as the printing substrate.

7. A method according to claim 6, characterised in that the material which is to be imprinted is not white but has any desired colour and in that the colour print of the image area in question is formed of a plurality of unit areas by application of opaque printing inks on the printing substrate, each individual image area being divided into part-areas of equal size and each part-area being split into adjacently situated unit areas which form a chromatic component and an achromatic component which determines the colour shade to be established, the colour white being used additionally as an eighth printing colour, for coverage of those unit areas which, in the case of seven colour printing on a white substrate, are left uncovered.

Fig. 1

Fig. 2

Fig. 4

Panel VII:
- $Y_{00}$ $V_{00}$ — $Y_{00}$ $V_{50}$ — $Y_{00}$ $V_{100}$
- $Y_{50}$ $V_{00}$ — **VII** — $Y_{50}$ $V_{00}$
- $Y_{100}$ $V_{00}$ — $Y_{100}$ $V_{50}$ — $Y_{100}$ $V_{100}$

Panel VIII:
- $M_{00}$ $G_{00}$ — $M_{00}$ $G_{50}$ — $M_{00}$ $G_{100}$
- $M_{50}$ $G_{00}$ — **VIII** — $M_{50}$ $G_{100}$
- $M_{100}$ $G_{00}$ — $M_{100}$ $G_{50}$ — $M_{100}$ $G_{100}$

Panel IX:
- $C_{00}$ $O_{00}$ — $C_{00}$ $O_{50}$ — $C_{00}$ $O_{100}$
- $C_{50}$ $O_{00}$ — **IX** — $C_{50}$ $O_{100}$
- $C_{100}$ $O_{00}$ — $C_{100}$ $O_{50}$ — $C_{100}$ $O_{100}$

## Fig. 3